# EUROPÄISCHE PATENTANMELDUNG

(11) **EP 1 190 901 A2**
(43) Veröffentlichungstag der Anmeldung: **27.03.2002**
(21) Anmeldenummer: 01122175.1
(22) Anmeldetag: 15.09.2001
(51) Int. Cl.: B60P 7/08, B60P 7/135

(54) **Vorrichtung zur Sicherung von Ladegut**

(30) Priorität: 20.09.2000 DE 10046495
(71) Anmelder: Nickel & Goeldner Spedition GmbH, 39397 Schwanebeck (DE)
(72) Erfinder: Nickel, Matthias, 39397 Schwanebeck (DE); Goeldner, Ralf-Peter, 38836 Dardesheim (DE)
(74) Vertreter: Leinung, Günter

(57) **Zusammenfassung**

Die Erfindung bezieht sich auf eine Vorrichtung zur Sicherung von Ladegut, vorrangig für gestapeltes Ladegut wie Flaschenkästen oder dergleichen, das auf Ladeflächen von Transportfahrzeugen sowie auf Anhängern und Sattelauflegern aufgesetzt und zu diesen gesichert wird.

Die geschaffene Vorrichtung besteht aus einem höhenverstellbaren und auf das Ladegut auflegbaren Rahmen 1, welcher aus zwei Längsholmen 2 und die Längsholme 2 verbindenden Querholmen 3 besteht, wobei ein Längsholm 2 des Rahmens 1 federbelastet und in Richtung der Querholme 3 des Rahmens 1 und somit horizontal beweglich in den Querholmen 3 gelagert ist.

## Beschreibung

Die Erfindung bezieht sich auf eine Vorrichtung zur Sicherung von Ladegut, vorrangig für gestapeltes Ladegut wie Flaschenkästen oder dergleichen, das auf Ladeflächen von Transportfahrzeugen sowie auf Anhängern und Sattelauflegern aufgesetzt und zu diesen gesichert wird.

Derartige Vorrichtungen zur Sicherung und Halterung von Ladegut sind in vielfältiger Weise bekannt. Dies betrifft sowohl ihre Ausgestaltung als auch ihre Anordnung im jeweiligen Transportfahrzeug.

So ist bereits vorgeschlagen worden, zwischen den Ladegutstapeln längsverschiebbare Zwischenwände vorzusehen, die oben und unten in der Transporteinheit, beispielsweise Containern und Wechselbehältern, mittels Raster an in der Transporteinheit angeordneten Rastelementen festlegbar sind, wobei zwischen der letzten Zwischenwand und der Stirnwand der Transporteinheit ein Zwischenraum vorgesehen ist. Bei dieser Vorrichtung sind die Rasterelemente gegen die Kraft einer Feder aus einer Mittelstellung in beide Längsrichtungen der Transporteinheit längsverschiebbar angeordnet und die Rastelemente sind mit mindestens einem Stoßdämpfer gekoppelt, welcher Relativbewegungen der Rastelemente zur Transporteinheit dämpfen soll.

Bekannt sind auch Vorrichtungen zur Sicherung und Festlegung von Ladegütern auf der Ladefläche eines Transportfahrzeuges, die einen aufblasbaren Sack aufweisen, der im aufgeblasenen Zustand die Ladegüter dadurch zuverlässig festlegen soll, dass er die Ladegüter gleichsam vollständig in allen Richtungen umschließt und selbst durch die Ladegüter, den Seitenwänden und der Dachkonstruktion eines Transportfahrzeuges begrenzt wird. Diese Vorrichtung ist mit der WO 96/01194 bekannt geworden.

Aus der DE 42 29 557 C 1 ist ferner eine Faltenwurfeinrichtung für Laderaum-Aufbauverkleidungen von Transportfahrzeugen bekannt, die zum Zwecke des Verschließens der Ladefläche und zur Sicherung des Ladegutes aus einer faltbaren Plane besteht, die an vertikalen Stäben geführt und gehalten ist. Die faltbare Plane ist durch die Verfahrbarkeit der Vertikalstäbe in eine Falt- oder Spannposition verbringbar, wobei die Verkleidung jeweils annähernd mittig zwischen zwei Vertikalstäben eine den Faltenwurf unterstützende Verstärkung aufweist, in deren Längsachse eine die Faltenbildung kontrollierende und/oder unterstützende Zugfeder angeordnet ist.

Diese Einrichtung bezieht sich unmittelbar auf die Ausbildung und Anordnung einer Plane, die unmittelbar über die Decken und Wandverkleidungen des jeweiligen Transportfahrzeuges geführt und gezogen werden. Allerdings verlangen diese Einrichtungen zusätzliche Stütz- und Arretiereinrichtungen für das Ladegut, denn ein sicherer Schutz des Ladegutes nur durch Planen ist nicht ausreichend.

Ferner sei auf die DE 198 06 706 A 1 verwiesen, mit der eine Ladegut-Haltevorrichung für ein Transportfahrzeug bekannt geworden ist, welche insbesondere für quaderförmiges Ladegut wie Flaschenkästen oder dergleichen geeignet sein soll. Diese Haltevorrichtung bezieht sich auf ein Transportfahrzeug mit einer eine Ladefläche bildenden Bodenkonstruktion zur Aufnahme des Ladegutes sowie einer Dach- und Wandkonstruktion, wobei unter der Dachkonstruktion des Transportfahrzeuges eine sich waagerecht erstreckende Einrichtung vorgesehen ist, die mittels einer Verstelleinrichtung an das jeweilige aufliegende Ladegut zu dessen Halterung oberseitig auflegbar ist. Die Einrichtung selbst weist einen ebenen Rahmen auf, der mit simultanbewegbaren Linearantrieben verbunden ist, die an der Wandkonstruktion des Transportfahrzeuges vorgesehen sind.

Es wird ferner ausgeführt, dass der auf das Ladegut auflegbare Rahmen mit Querstreben ausgebildet ist, die voneinander einen Rasterabstand aufweisen, welcher der entsprechenden Grundabmessung des Flaschenkastens oder einer kompletten Palette entspricht.

Ferner ist dieser Rahmen mit mindestens einer Längsstrebe ausgebildet und die für die Beweglichkeit der Einrichtung notwendigen Antriebe sind als pneumatische Kolben-Zylindereinheiten oder als elektromotorische Antriebsmodule ausgebildet. Mit dieser Einrichtung mag wohl eine gute Sicherung des Ladegutes erreicht werden, jedoch ist ihr Einsatzgebiet auf ganz spezielle Fahrzeuge begrenzt und schließlich bedarf es eines erheblichen konstruktiven und materiellen Aufwandes zur Realisierung und zur Anwendung dieser Haltevorrichtung.

Der vorliegenden Erfindung liegt daher die Aufgabe zugrunde, eine Vorrichtung zur Sicherung von Ladegut vorrangig für gestapeltes Ladegut zu entwickeln, welche relativ einfach ausgebildet ist und zuverlässig das Ladegut sichert und gleichfalls die Möglichkeit gegeben ist, diese Vorrichtung an Fahrzeugen bzw. Anhängern oder Sattelauflegern unterschiedlicher Breiten und Längenmaße zum Einsatz zu bringen.

Erfindungsgemäß wird die Aufgabe mit den Merkmalen des Anspruchs 1 gelöst.

Bevorzugte Ausführungen und vorteilhafte Lösungen ergeben sich aus den Unteransprüchen.

Unter Beachtung einer zuverlässigen Sicherung von Ladegut und unter Berücksichtigung eines weitestgehend geringen Zeitaufwandes bei der Sicherung von Ladegut wurde eine Vorrichtung zur Sicherung von Ladegut geschaffen, welche unterhalb der Dachkonstruktion eines Transportfahrzeuges oder auch eines Anhängers, aber speziell eines Sattelauflegers, höhenverstellbar anordbar ist.
Dabei kann diese Vorrichtung unmittelbar bei der Herstellung eines Transportfahrzeuges oder des Sattelauflegers vorgesehen werden, gleichfalls besteht aber auch die Möglichkeit, vorhandene Transportfahrzeuge mit dieser Vorrichtung auszurüsten.

Die geschaffene Vorrichtung besteht dabei aus einem höhenverstellbaren und auf das Ladegut auflegbaren Rahmen, welcher aus zwei Längsholmen und die Längsholme verbindenden Querholmen besteht, wobei ein Längsholm des Rahmens federbelastet und in Richtung der Querholme des Rahmens und somit horizontal beweglich in den Querholmen gelagert ist.
Der Rahmen in seiner Gesamtheit, dass heißt, seine Längs- und Querholme sind aus einem metallischen Leichtprofil ausgebildet, wobei der Rahmen in seinen Abmaßen der Ladefläche des Transportfahrzeuges angepasst ist. Dies bedeutet, der Rahmen entspricht in seiner Breiten- und Längsausführung den Abmaßen des jeweiligen Transportfahrzeuges, vorrangig für einen Sattelaufleger ausgebildet, da unter Beachtung einer optimalen Auslastung von Ladeflächen und eines effektiven Transports derartige Sattelaufleger weitestgehend zum Einsatz kommen.

Die Vorrichtung ist ferner so ausgebildet, dass sie über Seilzüge mit Hebeeinrichtungen, vorrangig Luftzylinder, verbunden sind, welche in der Dachkonstruktion des jeweiligen Transportfahrzeuges angeordnet sind.

In einer vorteilhaften Ausführung ist der Gesamtrahmen über vier Aufnahmen und den entsprechenden Seilzügen mit vier Luftzylindem verbunden, die sichern, dass der Gesamtrahmen, wenn die Ladefläche mit Ladegut bestückt werden soll, an die Dachkonstruktion und somit nach oben verfahren werden kann, um ein ungehindertes Beladen des jeweiligen Fahrzeuges zu gewährleisten.

Zur Erfindung gehört auch, dass neben seiner breitenmäßigen Veränderung der Rahmen auch in seiner Länge veränderbar ausführbar ist. Dies in der Art und Weise, dass im hinteren Bereich der Rahmen, ca. ¼ seiner Gesamtlänge, so gestaltet ist, dass dieses Rahmenendteil in den größeren Teil des Rahmens eingeschoben werden kann, was dadurch realisiert wird, dass die beiden Längsholme des Rahmenendstückes mit Längsholmenteilstücken kleineren Querschnittprofils ausgebildet sind, die in die inneren Querschnittsprofile der beiden anderen Längsholme des Rahmens eingreifen und in diesen geführt sind.

Eine weitere Möglichkeit und somit ein weiteres Ausführungsbeispiel der Gestaltung des Rahmens besteht darin, dass das Rahmenendstück über Klappscharniere mit dem Rahmen verbunden ist und bei Bedarf über diese Klappscharniere abgesenkt bzw. abgeschwenkt werden kann. Vorgesehene Arretierungseinrichtungen sichern dabei das Rahmenendstück zum Grundrahmen. Dies sowohl im abgeschwenkten Zustand als auch im ausgeschwenkten Zustand, dass heißt, wenn das Rahmenendstück in einer Ebene zum Grundrahmen positioniert ist.

Dies sind bevorzugte Ausführungen, wobei die geschaffene Vorrichtung in ihrer vollen Länge jederzeit verwendet werden kann, also auch bei nicht voller Auslastung der gesamten Ladefläche und gleichfalls gewährleistet ist, dass das Ladegut ausreichend gesichert ist. Dies wird möglich, dass am Ende des Ladegutes und in seiner Höhe Stützleisten vorgesehen sind, die auf den seitlichen Stützrahmen des Transportfahrzeuges aufliegen und somit den Rahmen im abgesenkten Zustand eine zusätzliche Stützung geben.

Ferner gehört zur Erfindung, dass die Vorrichtung im abgesenkten Zustand, dass heißt, wenn sie auf dem Ladegut aufliegt, zusätzlich über Gurte gesichert und verspannt wird. Hier wird die Möglichkeit genutzt, dass derartige Sattelaufleger mit Gurten und Gurtspann- und Arretiereinrichtungen ausgebildet sind oder aber, wenn ein nachzurüstendes Fahrzeug diese Gurtspanneinrichtungen nicht aufweist, diese schnellstens und mit einfachen Mitteln nachgerüstet werden können.
Hinsichtlich einer guten Führung der umlaufenden Gurte, ist der Rahmen im Bereich seiner Querholme mit entsprechenden Gurtführungen ausgebildet, die oberhalb auf den Querholmen angeordnet sind.

Ferner gehört zur Erfindung, dass in einer bevorzugten Ausführungsform seitlich der Längsholme Führungsleisten angeordnet sind, die über die untere Kante der Längsholme hinausragen und somit eine zusätzliche seitliche Stützung und Sicherung des Ladegutes bewirken.

Mit nachfolgendem Ausführungsbeispiel soll die Erfindung näher erläutert werden.

Die dazugehörige Zeichnung zeigt in
- Figur 1:: eine Draufsicht auf die Vorrichtung,
- Figur 2:: eine Seitenansicht der Vorrichtung,
- Figur 3:: eine Draufsicht der Vorrichtung mit verjüngtem Rahmenendstück,
- Figur 4:: eine Prinzipskizze der Anordnung der Vorrichtung in einem Transportmittel, einem Sattelaufleger, in einer Queransicht.

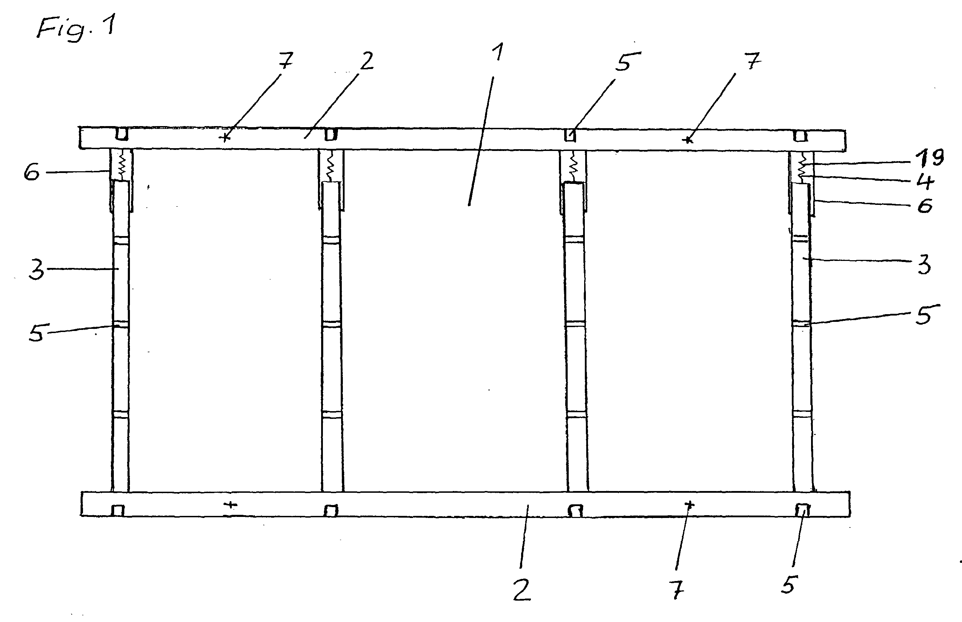

Der Aufbau und die Ausbildung der Vorrichtung zur Sicherung von Ladegut ergibt sich aus der Darstellung des Rahmens 1 der Vorrichtung gemäß der Figur 1 und besteht aus zwei Längsholmen 2, die über Querholme 3 miteinander verbunden sind.

Die Verbindung der Querholme 3 zu den Längsholmen 2 erfolgt dabei in der Form, dass einerseits die Querholme 3 fest mit den Längsholmen 2 verbunden sind, wobei vorzugsweise hier eine Schweißverbindung angewendet wird.
Die gegenüberliegende Befestigung zwischen dem Längsholm 2 und den Querholmen 3 erfolgt über gefederte Lagerungen 4, welche so ausgebildet sind, dass die Querholme 3 in Querholmgehäusen 6 längsbeweglich gelagert sind und endseitig sind die Querholme 3 über eine Feder 19 mit dem Längsholm 2 verbunden.
Die Verbindung in diesem Bereich ist ferner so ausgebildet, dass in den Querholmgehäusen 6 zusätzliche Sicherungselemente vorgesehen sind, die ein Herausrutschen der einzelnen Querholme 3 aus dem jeweiligen Querholmgehäuse 6 verhindern, wobei die jeweils eingesetzte Feder 19 so dimensioniert ist, dass sie zum einen eine leichte Beweglichkeit und Führung der einzelnen Querholme 3 mit dem fest verbundenen Längsholm 2 innerhalb der Querholmgehäuse 6 gewährleisten, andererseits aber auch gewährleistet ist, dass allein durch die Kraft der Federn 19 die Querholme 3 mit dem fest verbundenen Längsholm 2 in dem jeweiligen Querholmgehäuse 6 sicher gelagert sind.

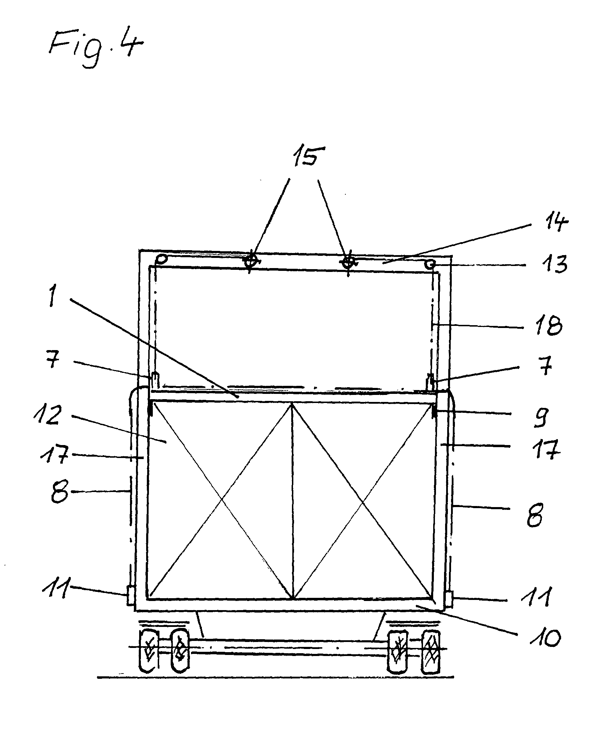

Auf den Oberseiten der Längsholme 2, der Oberfläche der Längsholme 2, die nicht auf dem Ladegut 12 aufliegen, sind Tragösen 7 befestigt, in denen Seilzüge 18 befestigt sind, die wiederum über Umlenkrollen 13 geführt und mit in der Dachkonstruktion 14 des Sattelauflegers 10 vorgesehen Luftzylindern 15 verbunden sind, wie in der Figur 4 dargestellt.

Ferner sind auf den Oberflächen der Querholme 3 in bestimmten Abständen Gurtführungen 5 vorgesehen, wobei die Längsholme 2 an den Umlenkpunkten gleichfalls mit Gurtführungen 5 ausgebildet sein können, um eine gute Führung der durch die Gurtführungen 5 verlaufenden Spanngurte 8 in diesen Bereichen zu gewährleisten.

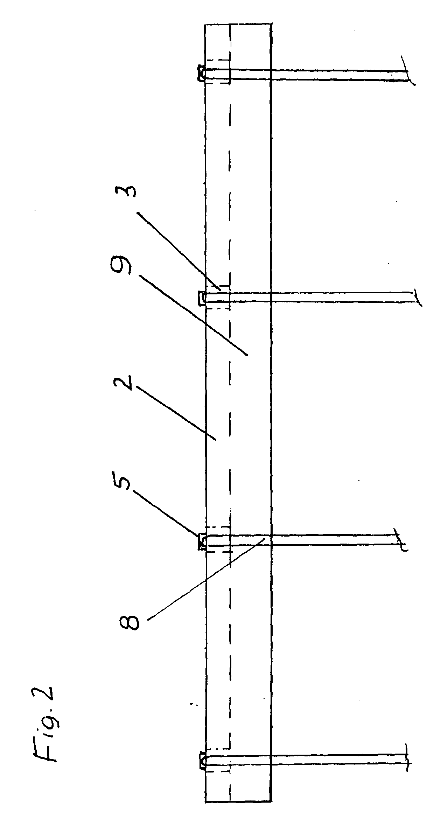

Aus der Darstellung nach Figur 2 ergibt sich, dass seitlich der Längsholme 2 Führungsleisten 9 an diesen befestigt sind, die über die untere Kante der Längsholme 2 hinausragen und im abgesenkten Zustand des Rahmens 1, bei seiner Auflage auf dem Ladegut 12, das Ladegut 12 seitlich umschließen und somit eine zusätzliche Sicherung des Ladegutes 12 gewährleisten.

Ferner ergibt sich aus dieser Darstellung, wie die Spanngurte 8 in den Gurtführungen 5 eingeordnet und über den gesamten Rahmen 1 geführt sind.

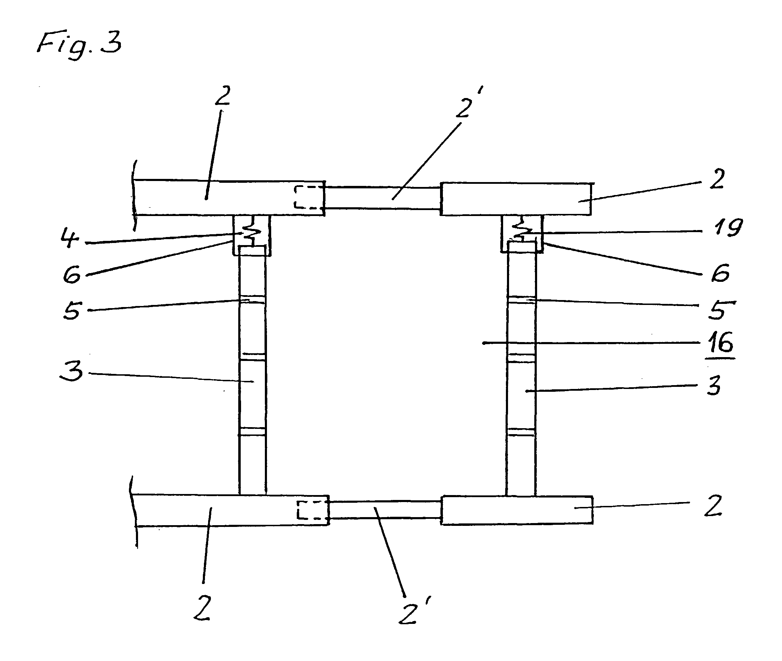

Ein weiteres Ausführungsbeispiel des Rahmens 1 ist in der Figur 3 dargestellt, aus der sich ergibt, dass das hintere Teilstück vom Rahmen 1 als ein Rahmenendstück 16 ausgebildet ist, welches in seiner Grundausführung dem des bereits beschriebenen und dargestellten Rahmens 1 entspricht, allerdings sind die Längsholme 2 des Rahmenendstückes 16 teilweise mit einem geringeren Querschnitt ausgebildet, so dass gesichert ist, dass diese Längsholme 2' des Rahmenendstückes 16 in das Innenprofil der Längsholme 2 vom Rahmen 1 eingreifen und in diesen geführt sind.
Zur Lage- und Positionssicherung des Rahmenendstückes 16, im ausgefahrenen bzw. eingefahrenen Zustand, sind entsprechende Sicherungsbolzen vorgesehen, die das Rahmenendstück 16 zum Rahmen 1 verspannen.
Die Figur 4 zeigt in der prinziphaften Darstellung den Beladezustand eines Sattelauflegers 10, auf dem das Ladegut 12 eingeordnet ist und auf dem der Rahmen 1 auf dem Ladegut 12 aufliegt und der Rahmen 1 über seine Längsholme 2 zwischen den Rungen 17 vom Sattelaufleger 10 geführt ist. Gezeigt ist ferner, dass das Ladegut 12 über den Rahmen 1 und mittels Spanngurten 8, die oberhalb zum Rahmen 1 geführt und in beidseitig des Sattelauflegers 10 vorgesehenen Spanngurtschlössern 11 eingreifen, somit das gesamte Ladegut 12 einschließlich des Rahmens 1 zum Sattelaufleger 10 verspannt und befestigt sind.
Die seitlich der Längsholme 2 des Rahmens 1 vorgesehenen Führungsleisten 9 übergreifen dabei das Ladegut 12 und gewährleisten eine zusätzliche seitliche Sicherung desselben.
Aus dieser Darstellung ergibt sich ferner die Anordnung der Luftzylinder 15 in der Dachkonstruktion 14 vom Sattelaufleger 10 und es ist gezeigt, dass die Luftzylinder 15 über Seilzüge 18 mit den Tragösen 7 des Rahmens 1 verbunden sind. Zur exakten Führung der Seilzüge 18 sind in der Dachkonstruktion 14 Umlenkrollen 13 vorgesehen, die so positioniert sind, dass sie mit den Tragösen 7 vom Rahmen 1 weitestgehend übereinstimmen, fluchten, so dass die Seilzüge 18 in senkrechter Position zwischen den Umlenkrollen 13 zu den Tragösen 7 verlaufen und in diesen befestigt sind.

Bei einer Vielzahl von Sattelauflegern 10 und anderen Transportfahrzeugen sind die seitlichen Abstände zwischen den Wandverkleidungen oder auch den vorhandenen Rungen sehr unterschiedlich, wobei es gleichfalls Ausführungen von Rungen gibt, die eine geneigte Form besitzen bzw. in geneigter Form im jeweiligen Transportfahrzeug angeordnet sind.
Diese unterschiedlichen Breitenmaße bzw. Abstandsmaße zwischen sich gegenüberstehenden Rungen 17 werden durch den Rahmen 1 infolge seiner Querbeweglichkeit in horizontaler Ebene ausgeglichen. Dies bedeutet, der Rahmen 1 gleitet bei einer Ab- oder Aufwärtsbewegung zwischen den Rungen 17, und wird bei Abstandsveränderungen entweder zusammengedrückt oder bei einer Abstandserweiterung bewirken die federnden Lagerungen 6 das Auseinanderdrücken des Rahmens 1, so dass dieser immer in dem erforderlichen Breitenmaß auf dem Ladegut 12 zur Auflage kommt.

Soll nun ein derart beladener Sattelaufleger 10 entladen werden, so kann dies beidseitig des Sattelauflegers 10 erfolgen. Dazu bedarf es des Hochschlagens oder auf Aufziehens der seitlichen Planen, die den gesamten Sattelaufleger 10 im Bereich seiner Ladefläche überdecken und des Öffnens des auf der Ladeseite vorgesehenen Spanngurtschlosses 11. Sind die Spanngurte 8 aus den Spanngurtschlössern 11 entriegelt, wird der Rahmen 1 mittels der Luftzylinder 15 nach oben verfahren. Während dieses Herauffahrens des Rahmens 1 gleiten die gelösten Spanngurte 8 in ihren Gurtführungen 5, ohne dass dadurch die Spanngurte 8 verklemmt werden.

Ist der Rahmen 1 in der oberen Position angelangt, kann das Ladegut 12 vom Sattelaufleger 10 entnommen werden.
Selbstverständlich besteht die Möglichkeit, den Sattelaufleger 10 beidseitig zu entleeren. Dazu bedarf es in analoger Weise der Entriegelung der Spanngurte 8 aus den Spanngurtschlössern 11, so dass beim Heraufziehen des Rahmens 1 auf der anderen Längsseite vom Sattelaufleger 10 das Ladegut 12 auch dieser Seite entnommen werden kann.

Das Bestücken bzw. Beschicken des Sattelauflegers 10 kann in analoger Weise seiner Entladung sowohl einseitig oder auch beidseitig erfolgen.
Ist die Ladefläche des Sattelauflegers 10 mit dem Ladegut 12 beladen, erfolgt nun der Sicherungsvorgang des Ladegutes 12, indem wiederum die Luftzylinder 15 in Betrieb gesetzt werden, diesmal entgegen des Hebevorganges des Rahmens 1, so dass der Rahmen 1 durch sein Eigengewicht an den seitlichen Rungen 17 nach unten auf das Ladegut 12 abgesenkt wird. Während der Abwärtsbewegung des Rahmens 1 werden unterschiedliche Abstände zwischen den Rungen 17 dadurch ausgeglichen, dass der beweglich gelagerte Längsholmen 2 dies durch seine Lageveränderung in Quer- bzw. Horizontalrichtung ausgleicht.
Liegt der Rahmen 1 auf dem Ladegut 12 auf, bedarf es lediglich noch des Einführens der Spanngurte 8 in die entsprechenden Spanngurtschlösser 11 und das gesamte Ladegut 12 ist zum Sattelaufleger 10 gesichert.

Neben dem Vorteil des Ausgleiches unterschiedlicher Breitenmaße von Sattelauflegern bzw. anderen Transportfahrzeugen zwischen den Seitenwänden bzw. Rungen 17, ergibt sich ein weiterer Vorteil in der wesentlichen Verringerung der Beschickzeit eines Sattelauflegers, aber insbesondere in der Verringerung des Zeitaufwandes zur Sicherung des Ladegutes 12.

## Patentansprüche

1. Vorrichtung zur Sicherung von Ladegut, vorrangig für gestapeltes Ladegut wie Flaschenkästen oder dergleichen, das auf Ladeflächen von Transportfahrzeugen, Anhängern und Sattelauflegern aufsetzbar ist, bestehend aus einem an der Dachkonstruktion des jeweiligen Transportfahrzeuges mittels befestigten und höhenverstellbaren Rahmens, der oberseitig auf das Ladegut auflegbar ist, **dadurch gekennzeichnet, dass**
der Rahmen (1) aus zwei Längsholmen (2) und die Längsholme (2) verbindenden Querholmen (3) besteht, wobei ein Längsholm (2) des Rahmens (1) federbelastet und in Richtung der Querholme (3) des Rahmens (1) und somit horizontal beweglich in den Querholmen (3) gelagert ist.

2. Vorrichtung nach Anspruch 1, **dadurch gekennzeichnet, dass**
zwischen den Längsholmen (2) vom Rahmen (1), in Abhängigkeit seiner Länge, zwei bis vier Querholme (3) angeordnet und auf den Oberseiten der Querholme (3), zueinander beabstandet, Gurtführungen (5) vorgesehen sind und fluchtend zu diesen, die Längsholme (2) an ihren äußeren Kanten, den Umlenkpunkten, gleichfalls Gurtführungen (5) aufweisen.

3. Vorrichtung nach einem der Ansprüche 1 bis 2, **dadurch gekennzeichnet, dass**
der Rahmen (1) über Seilzüge (18) die in auf den Oberseiten der Längsholme (2) vorgesehenen Tragösen (7) befestigt und über Umlenkrollen (13) geführt sind, mit einem in der Dachkonstruktion (14) eines Sattelauflegers (10) angeordneten Luftzylindern (15) verbunden ist.

4. Vorrichtung nach einem der Ansprüche 1 bis 3, **dadurch gekennzeichnet, dass**
an den äußeren Seitenflächen der Längsholme (2), über die Unterseiten der Längsholme (2) hinausragende Führungsleisten (9) angeordnet sind.

5. Vorrichtung nach einem der Ansprüche 1 bis 4, **dadurch gekennzeichnet, dass**
der Rahmen (1) zweigeteilt ausgebildet ist, dessen Rahmenendstück (16) über seine verjüngend ausgebildeten Längsholme (2') im Kastenprofil der Längsholme (2) gleitend und längsbeweglich angeordnet ist.

6. Vorrichtung nach einem der Ansprüche 1 bis 5, **dadurch gekennzeichnet, dass**
das Rahmenendstück (16) über Kippscharniere zum Rahmen (1) schwenkbar befestigt ist.

7. Vorrichtung nach einem der Ansprüche 5 bis 6, **dadurch gekennzeichnet, dass**
das Rahmenendstück (16) über Sicherungsbolzen zu den Längsholmen (2) und somit zum Rahmen (1) gesichert ist.

8. Vorrichtung nach einem der Ansprüche 1 bis 7, **dadurch gekennzeichnet, dass**
die Längs- und Querholme (2; 3) vorzugsweise aus einem metallischen Kastenprofil bestehen.

9. Vorrichtung nach einem der Ansprüche 1 bis 8, **dadurch gekennzeichnet, dass**
die gefederten Lagerungen (4) mit je einer Feder (19), einer Druckfeder, bestückt sind, die einerseits an den Querholmen (3) und andererseits an dem beweglichen Längsholm (2) befestigt sind.
